# EUROPEAN PATENT SPECIFICATION

(11) **EP 3 846 092 B1**
(45) Date of publication and mention of the grant of the patent: **08.07.2026**
(21) Application number: 20193238.1
(22) Date of filing: 27.08.2020
(51) Int. Cl.: G06Q 10/00

(54) **DEVICE AND METHOD FOR PROMOTING ECO-FRIENDLY ACTIONS AND HELPING TO ACHIEVE PREDETERMINED ENVIRONMENTAL GOALS**
VORRICHTUNG UND VERFAHREN ZUR FÖRDERUNG ÖKOFREUNDLICHER MASSNAHMEN UND ZUR ERREICHUNG VORBESTIMMTER UMWELTZIELE
DISPOSITIF ET PROCÉDÉ POUR PROMOUVOIR DES ACTIONS ÉCOLOGIQUES ET AIDER À RÉALISER DES OBJECTIFS ENVIRONNEMENTAUX PRÉDÉTERMINÉS

(30) Priority: 31.12.2019 EP 19306801; 19.02.2020 EP 20305156
(43) Date of publication of application: 07.07.2021
(73) Proprietor: ATOS FRANCE, 95870 Bezons (FR)
(72) Inventor: PONCE SUAREZ, Javier, 11211 Brooklyn, New York (US); VERGE, Oscar, New York, NY New York 10001 (US)
(74) Representative: Novagraaf Technologies

(56) References cited:
- US-A1- 2002 029 154
- US-A1- 2015 332 149
- US-A1- 2019 272 492

## Description

### Field of the invention

The present invention relates to the field of data processing systems or methods, specially adapted for administration and management purposes, linked to gaming aspects. More particularly, the invention relates to a new mobile application, said application being configured to display daily challenges in a questionnaire form.

### Description of Related Art

The number of organizations desiring to promote energy efficient behavior to their buildings' occupants increases with time. However, activities related to energy efficiency are often one-off activities and their results are neither sustainable nor measurable. One way of measuring impact is by making a comparison between what would have happened differently in the absence of a certain output and estimating a cause-effect relationship. Ultimately, this way of looking at impact sees it as the extent to which an action has a particular effect. However, due to the complexity of certain outcomes, it is not always intuitive to distinguish the output that created it.

Measuring impact can be a hard and expensive process. Indeed, it needs to define which outputs (activities) to measure, how to measure them, which tools to use, how to analyze the data collected and how to interpret it correctly or whom share it with.

Moreover, this is even more challenging in an internationally distributed environment. Indeed, some enterprises possess a distributed work environment, in which employees are separated by significant distances. For example, large business concerns can employ employees on different continents. The question then becomes how to effectively affect human behavior relevant to environmental resources over continents, e.g. energy efficiency, in a way that yields sustainable results. To that end, techniques have been offered to better analyze and map human behaviors relating to buildings' energy consumption. Correlating human behavioral inputs with energy consumption as well as with other building metadata and environmental factors has led to the development of evaluation systems. However, such a system requires the establishment of a complex and possibly intrusive system for analyzing employee behavior.

Thus, no system has been proposed that should apply to a multitude of employees distributed over several buildings, and possibly over several continents, and which does not require the installation of an external monitoring of the behavior of the employees.

Finally, the proposed tools do not allow either to measure the gains from the environmental policies implemented or to establish forecasts of environmental gains achievable over a period.

Thus, there is a need for a platform that at least partially solves the aforementioned problems.

Document US 2002/029154 A1 discloses a questions presenting method in a computer system to be answered to a user through an electronic interface. US 2015/332149 A1 refers to a computer-implemented method for tracking behaviour and goal achievement by a device, involving determining a degree of behaviour and providing animation of an avatar. US 2020/272492 A1 relates to a method for a user to understand inherent and residual risks in a vendor and partner eco-system.

### Technical problem

The invention aims to overcome the disadvantages of the prior art. In particular, the invention proposes a mobile application, said mobile application being configured to display daily challenges in a questionnaire form. The questionnaire aims at asking the mobile application user daily questions about his or her actions regarding an eco-friendly action.

Upon answering these daily questions, the user is awarded points which are displayed on his/her profile/avatar and his/her progression is represented by a growing seed which does grow as the user score is increasing.

This invention aims to propose a way to involve user/employee at a company level in an eco-friendly approach to decrease unnecessary consumption. Moreover, the mobile application allows to collect all user data and provide graphical representations of sustainability goals and achievements of the company.

### Summary of the invention

The following sets forth a simplified summary of selected aspects, embodiments and examples of the present invention for the purpose of providing a basic understanding of the invention. However, the summary does not constitute an extensive overview of all the aspects, embodiments and examples of the invention. The sole purpose of the summary is to present selected aspects, embodiments and examples of the invention in a concise form as an introduction to the more detailed description of the aspects, embodiments and examples of the invention that follow the summary.

Hence, according to **an aspect** of the present invention, it is provided a computer implemented method for promoting eco-friendly actions and helping to achieve predetermined environmental goals,
said method being implemented by a computer device comprising a processing unit, a communication module, a data memory configured to store rule-based algorithms, said computer device being configured to host an eco-friendly action platform accessible by a plurality of clients through a contribution user interface or a review user interface,
the method comprising the steps of:
   - Providing, by the processing unit, a contribution user interface that is presented on a plurality of clients, said contribution user interface being configured to access the eco-friendly action platform hosted by the computer device, the contribution user interface presenting a question, a progression level and an avatar representing said progression level, said progression level and avatar being associated with a user identification;
   - Receiving, by the communication module, a plurality of answers to the question, said answers being generated and sent by the clients;
   - Determining, by the processing unit and for each client that answered, a user score by processing the user related answer with the rule-based algorithm stored in the data memory;
   - Updating, by the processing unit, the progression level and/or the avatar based on the user score previously determined.

This method provides a way to involve user/employee in an eco-friendly approach at a company level to decrease unnecessary consumption. Moreover, this mobile application allows to collect all user data and provide graphical representations of sustainability goals and achievements of the company. Hence, it allows a measurement of the gains from the environmental policies implemented and the establishment of forecasts of environmental gains achievable over a period.

According to other optional features of the method:
- It comprises a step of displaying a classification of each user score per unit, per entity, and/or per geographical area. Such a possibility can improve user engagement.
- the rule-based algorithm is based on questions, answers and scoring rules relative to answers stored in the data memory. The rule-based algorithm can also be based on the user IDs in order to adapt to different groups of users.
- It comprises a step of computing, by the processing unit, of a goal indicator value, said goal indicator value corresponding to a value determined from a user score compared to a correspondence database. This step computes an amount of energy saved, CO₂ and/or greenhouse gas emission prevented by the action associated with the answer.
- It comprises a step of providing, by the processing unit, of a review user interface that is presented on at least one client, said review user interface being configured to access the eco-friendly action platform hosted by the server, the review user interface presenting aggregated values computed from answers, user scores, progression levels and/or goal indicator values. Hence, a user dedicated to the review of the eco-friendly action platform can access aggregated information allowing a measurement of the gains from the environmental policies implemented and the establishment of forecasts of environmental gains achievable over a period.
- It comprises a step of determining, a global score value translating a company's sustainability goal or achievement. Such a global score value can correspond to the gains from the environmental policies implemented.
- It comprises a step of determining, a world heat map showing saved energy impact made by users based on each user score. In a highly distributed work environment, such a step allows to identify the buildings that need particular attention.
- It comprises a step of receiving, by the communication module, consumption values measured by sensors positioned at one of the client's main locations and a step of computing, by the processing unit and rule-based algorithms, a corrected amount of greenhouse gas that has not been emitted regarding the users' scores and consumption values measured. Hence, the greenhouse gas emissions computed can be corrected by real values measured in building where the users are working.
- It comprises a step of computing, by the processing unit and rule-based algorithms, a corrected global score value, regarding the users' scores and consumption values measured. Hence, the predicted gains from the environmental policies implemented can be corrected by real values measured in buildings where the users are working.
- It comprises a step of computing, by the processing unit and rule-based algorithms, of a corrected world heat map showing saved energy impact made by users, regarding the users' scores and consumption values measured. Similarly, in a highly distributed work environment such a step allows to identify the building that need particular attention.
- The clients on which the contribution user interface is presented are mobile communication devices comprising a mobile application configured to display the contribution user interface.

According to **another aspect,** the invention relates to a system for promoting eco-friendly actions and helping to achieve predetermined environmental goals, said system comprising a computer device, a processing unit, a communication module, a data memory configured to store rule-based algorithms, said computer device being configured to host an eco-friendly action platform accessible by a plurality of clients through a contribution user interface or a review user interface, said system being configured to implement a method according to the invention.

According to other optional features of the system:
- the processing unit is further configured to compute a goal indicator value, said goal indicator value corresponding to a value determined from a user score compared to a correspondence database.
- the data memory is configured to store questions and answers, scoring rules relative to answers, user IDs and passwords.

According to **another aspect** of the present invention, it is provided a computer program comprising instructions stored in a data memory of a computer device for implementing a method according to the invention.

### Brief description of the drawings

The foregoing and other objects, features and advantages of the present invention will become more apparent from the following detailed description when taken in conjunction with the accompanying drawings in which:
FIG. 1 is a schematic view of a system according to an embodiment of the invention.
FIG. 2 is a schematic view of a process flow diagram of a method according to an aspect of the invention.
FIG. 3 is a schematic view of a process flow diagram of a step of providing a contribution user interface on a client in accordance with implementations of the invention.
FIG. 4 is a schematic view of an interface displayed on a computer device in accordance with implementations of the invention.

Several aspects of the present invention are disclosed with reference to flow diagrams and/or block diagrams of methods, devices and computer program products according to embodiments of the invention.

On the figures, the flow diagrams and/or block diagrams show the architecture, the functionality and possible implementation of devices or systems or methods and computer program products, according to several embodiments of the invention.

For this purpose, each box in the flow diagrams or block diagrams may represent a system, a device, a module or code, which comprises several executable instructions for implementing the specified logical function(s). In some implementations, the functions associated with the box may appear in a different order than indicated in the figures. For example, two boxes successively shown may be executed substantially simultaneously, or boxes may sometimes be executed in the reverse order, depending on the functionality involved. Each box of flow diagrams or block diagrams and combinations of boxes in flow diagrams or block diagrams, may be implemented by special systems that perform the specified functions or actions or perform combinations of special equipment and computer instructions.

### Detailed description

A description of example embodiments of the invention follows.

In the following description, "**predetermined goals**" means an objective to achieve which may be represented as a value expressing a decrease of a consumption of any kind of resources, such as electric resources consumption, water consumption, carbon diode emissions, greenhouse gas emissions, and so on.

In the following description, "**correspondence database**" means a collection of data recorded on a medium accessible by computer and organized so as to be easily accessible, administered and updated. A correspondence database according to the invention can include different types of content in the form of text, images or numbers and can thus correspond to any type of known database such as in particular a relational database, a distributed database or an object-oriented database. Such a database also encodes a plurality of questions coupled with a plurality of corresponding answers, each question / answer pair being associated with an environmental cost, such as an energy cost. Communication with such a database is ensured by a set of programs which constitute the database management system operating in client / server mode, the server receives and analyzes requests sent by the client in SQL format, for « structured query language », suited for communicating with a database.

In the following description, "**a platform**" may correspond to an access tool to access different types of information and applications via a client system from network resources. A tool to display a page of a platform access portal can be a web browser. However, a portal can also be integrated into other applications. A portal to a platform within the meaning of the invention is advantageously capable of presenting data from several sources such as web applications in a single aggregated web interface or in a browser. In addition, a platform access portal offers the possibility of displaying portlets in the aggregated interface. The portal configuration can include a portal definition with for example a file including an extensible markup language (XML), the portlet definition files for all the portlets associated with the portal, the Java server pages (JSP), the web application descriptors, images such as graphics interchange format files (GIFs), deployment descriptors, configuration files, Java archive files (JAR) that contain logical and layout instructions forms for the platform access portal application, and all other files necessary for a desired portal application.

The expression "**progression level**" means a value or more broadly an indicator translating the accomplishments of a user. Such accomplishments are linked to the answers provided by the user to questions. A high progression level being directly correlated to the score allocated to answers given by the user through the client.

In the following description, "**goal indicator**" relates to a value describing an environmental cost, such as an energetic cost saved or lost by the user. Such value is determined by comparing the score of the user related to each given answer to a related environmental cost, such as an energetic cost.

In the following description, « request » can relate to a request for information, generally identified by a "link" on a portal page. A request can be initiated by a "click" on a displayed symbol associated with the "link".

In the following description, « **client** » is a computer device including software that accesses a service made available by another computer device such as a server. Generally, the client accesses the service by way of a network.

In the following description, « **plurality** » within the meaning of the invention corresponds to at least two.

In the following description, « **correlation** » in the meaning of the invention corresponds to a statistical relationship, causal or not, between two variables or the values of two variables. In the broadest sense, any statistical association is a correlation, but this term designates, for example, the proximity between two variables and the establishment of a relationship of order. The term "causal" or "causality" in the sense of the invention corresponds to a causal statistical relationship between two variables or the values of two variables. In particular, one of the variables is a cause which is fully or partially responsible for the value of the other variable through an effect. The value of the first variable can be considered for example as a cause of a value (current or future) of the second variable. Whether for correlation or causality, one or more variables can have a statistical relationship with one or more other variables. In addition, an indirect correlation or causality within the meaning of the invention corresponds to the existence of a chain of correlation or causal link between a first variable and another variable. For example, a first variable is correlated with a second variable which is itself correlated with a third variable which is finally correlated with another variable.

The terms "**process**", "**compute** ", "**determine**", "**display**", "**extract**", "**compare**" or more broadly "**executable operation**" mean, within the meaning of the invention, an action performed by a computer device or a processor unless the context indicates otherwise. In this regard, the operations relate to actions and/or processes of a data processing system, for example a computer system or an electronic computing device, which manipulates and transforms the data represented as physical (electronic) quantities in the memories of the computer system or other devices for storing, transmitting or displaying information. In particular, calculation operations are carried out by the processor of the device, the produced data are entered in a corresponding field in a data memory and this field or these fields can be returned to a user for example through a Human Machine Interface formatting such data. These operations may be based on applications or software.

The terms or expressions "**application**", "**software**", "**program code**", and "**executable code**" mean any expression, code or notation, of a set of instructions intended to cause a data processing to perform a particular function directly or indirectly (for example after a conversion operation into another code). Exemplary program codes may include, but are not limited to, a subprogram, a function, an executable application, a source code, an object code, a library and/or any other sequence of instructions designed for being performed on a computer system.

By "**processor**" or "**processing unit**" is meant, within the meaning of the invention, at least one hardware circuit configured to perform operations according to instructions contained in a code. The hardware circuit may be an integrated circuit. Examples of a processor include, but are not limited to, a central processing unit, a graphics processor, an application-specific integrated circuit ("ASIC" according to Anglo-Saxon terminology), and a programmable logic circuit. A single processor or several other units may be used to implement the invention.

By "**coupled**" is meant, within the meaning of the invention, connected, directly or indirectly, with one or more intermediate elements. Two elements may be coupled mechanically, electrically or linked by a communication channel.

The expression "**human-machine interface**", within the meaning of the invention, corresponds to any element allowing a human being to communicate with a computer, in particular and without that list being exhaustive, a keyboard and means allowing in response to the commands entered on the keyboard to perform displays and optionally to select with the mouse or a touchpad items displayed on the screen. Another embodiment is a touch screen for selecting directly on the screen the elements touched by the finger or an object and optionally with the possibility of displaying a virtual keyboard.

By "**computer device**", it should be understood any device comprising a processing unit or a processor, for example in the form of a microcontroller cooperating with a data memory, possibly a program memory, said memories possibly being dissociated. The processing unit cooperates with said memories by means of internal communication bus.

In the following description, the same references are used to designate the same elements.

As mentioned hereafter, several solutions have been implemented to educate employees and to give birth to the desire of acting against environmental cost, such as energy cost habits to save environmental resources.

Thus, regarding the solutions developed in the state of the art, it is proposed to measure thresholds and launch tasks based on a workflow engine at a centralized electronic administration platform. It is possible to implement algorithms that modify the activity parameters when an activity related metric value is below the corresponding metric threshold. This allows for optimizing the success rate of the environmental consciousness interactive activities and, consequently, more environmental resources may be saved. It can also be proposed to display to users both their direct involvement, at different scales, in the process of saving environmental resources and their evolution over time.

To this end, the inventors have developed a computer implemented method and a system for promoting eco-friendly actions and helping to achieve predetermined environmental goals.

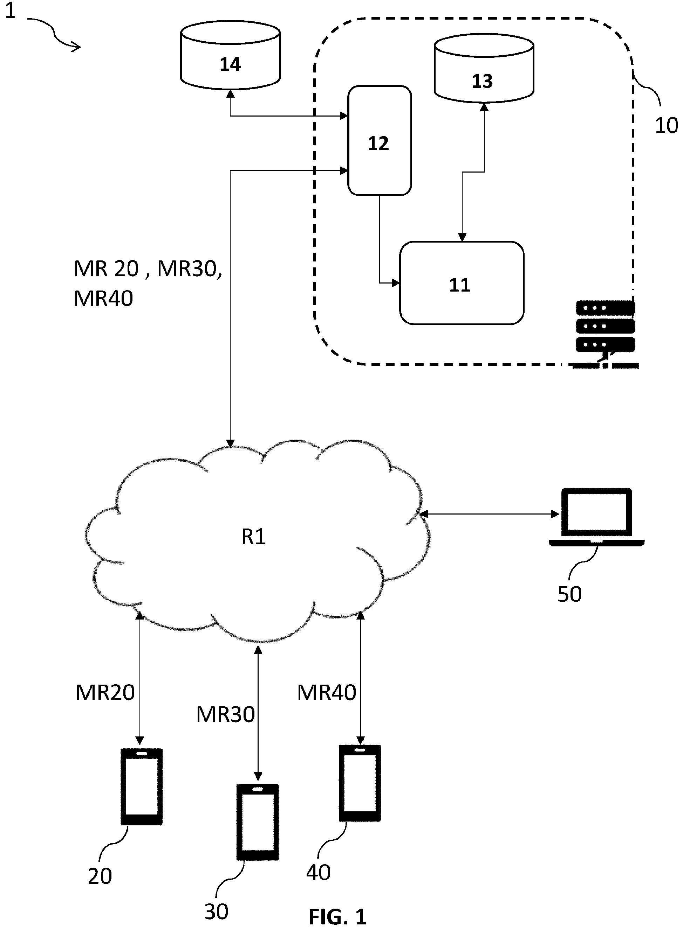

According to a **first aspect** of the invention and as illustrated in **figure 1**, it is provided a **system 1 for promoting eco-friendly actions** and helping to achieve predetermined environmental goals.

At a high level, the system 1 comprises a computer device 10 operable to receive, transmit, process, store, or manage data and information. According to some implementations, the system 1 may also include or be communicably coupled with an e-mail server, a web server, a caching server, a streaming data server, and/or another suitable server.

The illustrated example system 1 includes or is communicably coupled with one or more processors 11, a data memory 13, and it communicates across a network R1 with a plurality of clients 20,30,40 over a communication module 12.

The system 1, in particular the computer device 10, includes a **processing unit 11** comprising one or more processors. Although illustrated as a single processor in Figure 1, two or more processors may be used according to particular needs, desires, or particular implementations of the invention. Generally, the processing unit 11 executes instructions and manipulates data to perform the operations of the system 1 and in particular of the computer device 10.

The processing unit 11 is configured by machine readable instructions, stored on a data memory 13 in communication.

Hence, the system 1, in particular the computer device 10, also includes a **data memory 13** configured to store rule-based algorithms and data for the system 1. Indeed, generally, a processor will receive instructions and data from a read-only memory (ROM) or a random-access memory (RAM) or both. Generally, a computer system 1 or computer device 10 will also include, or be operatively coupled to, receive data from or transfer data to, or both, one or more mass storage devices for storing data, e.g., magnetic, magneto-optical disks, or optical disks. Computer-readable media (transitory or non-transitory, as appropriate), suitable for storing machine readable instructions and data, include all forms of non-volatile memory, media and memory devices, including by way of example semiconductor memory devices, erasable programmable read-only memory (EPROM), electrically-erasable programmable read-only memory (EEPROM), and flash memory devices; magnetic disks, e.g., internal hard disks or removable disks; magneto-optical disks; and CD-ROM, DVD+/- R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others.

The computer device 10 can be connected to the client 20,30,40,50 or other means of the system 1 **by a communication module 12.** The communication module 12 can interface with any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

**The client 20, 30, 40, 50** may be any computing device operable to connect to or communicate with at least the computer device 10 using the network R1. In general, the client 20, 30, 40 comprises an electronic computing device operable to receive, transmit, process, and store any appropriate data associated with the invention. Generally, the client 20, 30, 40 includes a processor, a client application, a data memory, and/or a human machine interface.

The client application is any type of application that allows the client 20, 30, 40 to navigate to/from, request, view, edit, delete, and or manipulate content on the client. In some implementations, the client application can be and/or include a web browser. In some implementations, the client-application can use parameters, metadata, and other information received at launch to access a particular set of data of the system 1.

A network interface is used by the client 20, 30, 40, for communicating with other computer devices using network R1.

There may be any number of clients 20, 30, 40 associated with the example system 1. For example, while the illustrated example of the invention includes four client 20,30,40,50 communicably coupled to the computer device 10 using network R1, alternative implementations of the invention may include any number of clients 20, 30, 40, 50 suitable for the purposes of the invention.

The illustrated client 20, 30, 40, 50 are intended to encompass any computing device such as a desktop computer, laptop/notebook computer, wireless data port, smart phone, personal data assistant (PDA), tablet computing device, one or more processors within these devices, or any other suitable processing device. For example, the client 20, 30, 40, 50 may comprise a computer that includes an input device, such as a keypad, touch screen, or other device that can accept user information, and an output device that conveys information associated with the operation of the system 1 or the client itself, including digital data, visual and/or audio information, or a GUI (for graphical user interface).

In general, the computer device 10 is a server that hosts an eco-friendly action platform, accessible by a plurality of clients 20, 30, 40, 50 through a contribution user interface or a review user interface, said system being configured to implement a method according to the invention.

The access to the eco-friendly action platform hosted by the computer device 10 is provided through a portal accessible via a web browser through the network R1 using requests and responses sent by clients 20, 30, 40, 50.

The computer device 10 is responsible for receiving requests using the network R1 from one or more applications associated with the client 20, 30, 40, 50 and responding to the received requests by processing said requests.

In some implementations, any and/or all components of the system 1, such as the computer device 10, both hardware and/or software, may interface with each other and/or the interface using an **application programming interface** (API) and/or a service layer. The API may include specifications for routines, data structures, and object classes. The API may be either computer-language independent or dependent and refers to a complete interface, a single function, or even a set of APIs. The service layer provides software services to the computer system 1. The functionality of the system 1 may be accessible for all service using this service layer. Software services, such as those provided by the service layer, provide reusable, defined functionalities through a defined interface. For example, the interface may be software written in JAVA, C++, or other suitable language providing data in extensible markup language (XML) format or another suitable format.

While described as an integrated component of the system 1 alternative implementations may illustrate the API and/or the service layer as stand-alone components in relation to other components. Moreover, any or all parts of the API and/or the service layer may be implemented as child or sub-modules of another software module, enterprise application, or hardware module without departing from the scope of this disclosure.

In order to provide a user with an information related to his impact on the environmental resources saved or lost, the processing unit 11 of the system 1, more particularly of the computer device 10 is further configured to compute a goal indicator value, said goal indicator value corresponding to a value determined from a user score compared to a correspondence database 14. Indeed, a correspondence database 14 according to the invention may comprise for each numerical value determining a user score a related value corresponding to a percentage or an amount of greenhouse gas that has been or not been emitted. Such goal indicator may then be displayed to the user to provide information on how much environmental resources he saved, or he lost regarding to his past behavior.

In an embodiment of a system 1 according to the invention, the correspondence database 14 may be stored in a data memory dedicated in the computer device 10 or in a data memory of a second computer device, such as a server.

As it will be described in detail here after, the data memory 13 of the computer device 10 may be configured to store questions and answers, scoring rules relative to answers, user IDs and passwords. It is also configured to store the instructions necessary for the implementation of a method for promoting eco-friendly actions according to the invention by the computer device 10.

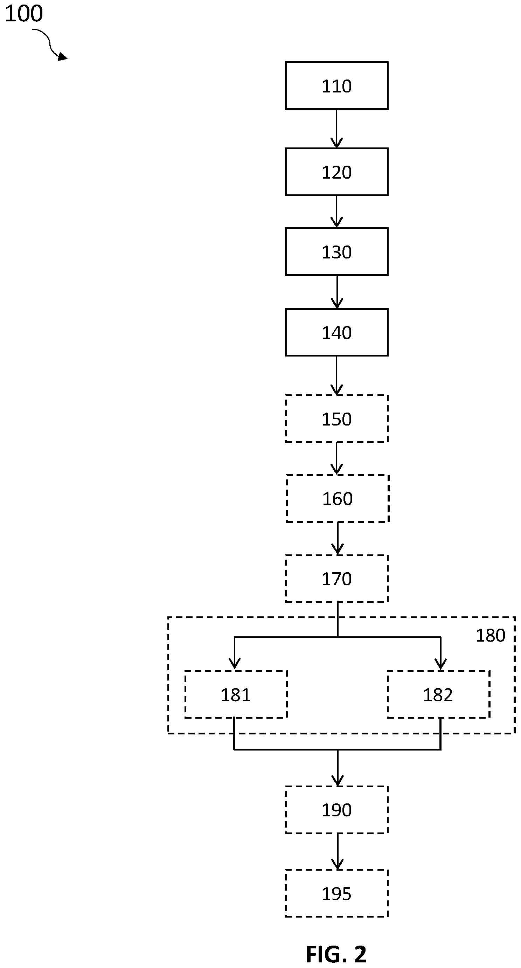

According to a **second aspect** of the invention and as illustrated in **Figure 2****,** it is provided a **computer implemented method for promoting eco-friendly actions** and helping to achieve predetermined environmental goals.

Thus, a computer implemented method according to the invention is adapted to provide an interactive application to help users take small steps to make significant impact in environmental sustainability.

Such a method offers the ability for users to challenge themselves, information to help users make conscious decisions to reduce the individual carbon footprint, helps employees contribute to their company's sustainability goals, provides the ability to make small changes on a day to day basis, to make an impact, points allocation motivates users to make better choices and view their growth overtime, or provides a view of impact of all employees' efforts on a world map, challenges employees by comparing scores with others.

More particularly, such a computer implemented method can be implemented by a computer device 10 comprising a processing unit 11, a communication module 12, a data memory 13 configured to store rule-based algorithms.

For example, the computer device 10 can be configured to host an eco-friendly action platform accessible by a plurality of clients 20, 30, 40, 50 through a contribution user interface or a review user interface.

As illustrated in figure 1, the method comprises the steps of providing 110 a contribution user interface that is presented on a plurality of clients 20, 30, 40; Receiving 120 a plurality of answers MR20, MR30, MR40 to the question Q1; Determining 130 for each client that answered a user score by processing the user related answer MR20, MR30, MR40 with the rule-based algorithm; Updating 140 the progression level LVL and/or the avatar ATR based on the user score previously determined.

As illustrated in figure 1, the method can comprise the steps of displaying 150 a classification of each user score per unit, per entity, and/or per geographical area; Computing 160 a goal indicator value; Providing 170 a review user interface that is presented on at least one client 50; Computing 180 an evaluation of the environmental resources saved by the company; Computing 190 a corrected amount of greenhouse gas that has not been emitted or energy saved; Computing 195 corrected global score value.

At first, a method 100 for promoting eco-friendly actions and helping to achieve predetermined environmental goals comprises the **step of providing 110 a contribution user interface** that is presented on a plurality of clients 20, 30, 40.

In particular, the user interface will present at least one question Q1. Such question Q1 can be stored in the data memory 13.

The user interface can also present a progression level LVL and/or an avatar ATR. The avatar ATR can represent said progression level. Generally, progression level LVL and avatar ATR will be associated with a user identification ID.

This step allows a user to log-in via the human machine interface of a client 20, 30, 40, through which said user can input its user credentials in order to log into the eco-friendly action platform (e.g., hosted on a computer device illustrated in the system 1 of Figure 1). As noted above, the eco-friendly action platform can be provided by an enterprise (e.g., company), where users of the eco-friendly action platform include employees of the enterprise. Accordingly, the user credentials can include the user's enterprise credentials (e.g., enterprise ID, which uniquely identifies the user within the enterprise, and password). In response to the user inputting credentials and selecting a start button, the user credentials are transmitted to the computer device 10, which authenticates the user based on the user credentials. In some examples, if the user cannot be authenticated (e.g., incorrect username and password combination), an error message can be displayed to the user. In some examples, if the user can be authenticated (e.g., correct username and password combination), a landing screen of the idea generation platform is displayed. In some examples, the user credentials are enterprise-level user credentials. That is, the user credentials are used by a respective user to authenticate the user to one or more computer-implemented systems operated by an enterprise. For example, the user credentials can include credentials used by an employee to log into computer-implemented systems of a company that employs the employee. In some examples, the use credentials are processed by an enterprise authentication service, which is independent of the eco-friendly action platform, to authenticate the user. In this manner, the enterprise-level security can be provided as part of the authentication process. Each user's credentials may also be associated with a company or its geographical location, more particularly to an entity or its geographical location, such as a subsidiary company of the company, and more particularly to a unit of the company, such as one of a service of a subsidiary company.

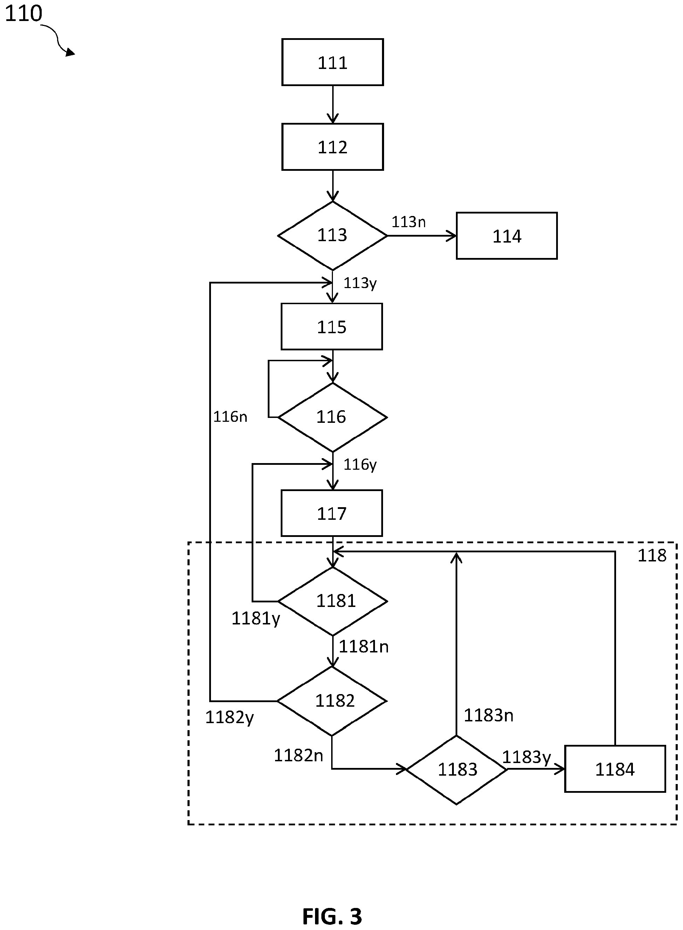

Thus, **Figure 3** depicts an example process of providing 110 a contribution user interface that is presented on a plurality of clients 20, 30, 40. In some examples, the example process of providing 110 a contribution user interface is provided by one or more computer-executable programs that are executed using one or more computer device. For example, the example process of providing 110 a contribution user interface is provided by a mobile application that is downloaded to and installed on a client device (e.g., a smartphone), and that enables a user to interact with the eco-friendly action platform of the present disclosure. User credentials are transmitted 111. For example, a user inputs user credentials (e.g., username, password) to a log-in screen (e.g., the log-in screen of a client 20, 30, 40 of figure 1). The user credentials are transmitted to a back-end system which is represented by the computer device 10 in figure 1, which processes the user credentials in an effort to authenticate the user. In some examples, the back-end system provides authentication data that indicates whether the user is authentic. Authentication data is received 112. For example, the client 20, 30, 40 receives authentication data from the back-end system. It is determined whether the user has been authenticated 113y or not 113n. For example, the client 20, 30, 40 processes the authentication data to determine whether the user was authenticated by the back-end system. If the user was not authenticated 113n, an error message is displayed 114 to the client 20, 30, 40 from which the user tried to authenticate himself. If the user was authenticated 113y, a landing screen is displayed 115. It is determined whether a user selection has been made 116.

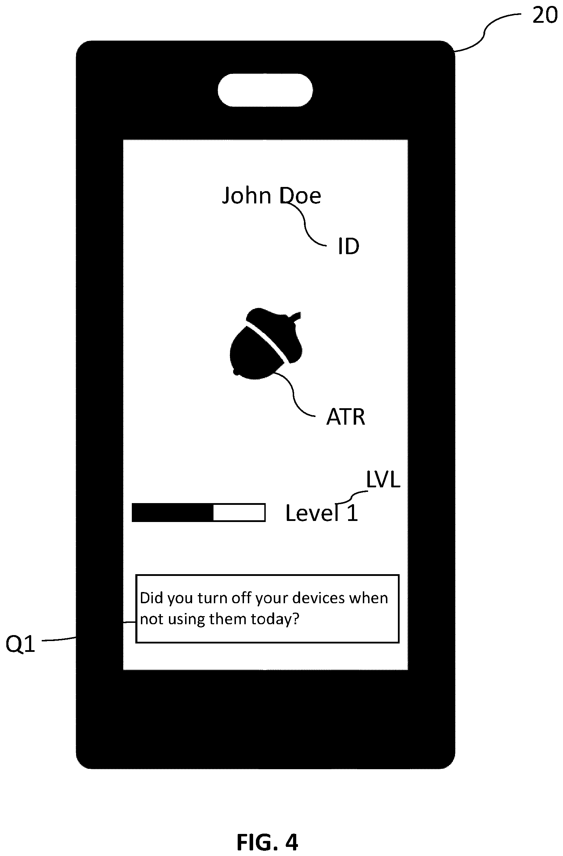

If a user selection has been made 116y, a corresponding screen is displayed 117. For example, the user may selects option buttons (not shown) to display one or several questions Q1, or to display a top ranking of users based on their score, or to display a predetermined environment goal related to a company objective, or to display a question Q1 which may be updated every predetermined period, such as every day. As described later in accordance with figure 4, the user may press a home button (not shown) to display an overview of the contribution user interface presenting a question Q1, a progression level LVL and an avatar ATR representing said progression level, said progression level LVL and avatar ATR being associated with a user identification ID.

Once the user has selected a button related to displaying a question Q1, a treatment 118 of the displayed question Q1 starts. It is determined 1181 whether the user has selected a back button. If the user has selected 1181y the back button, the previous screen is displayed. If the user has not selected 1181n the back button, it is determined whether the user has selected the home button. If the user has selected 1182y the home button, the landing screen is displayed 115. If the user has not selected 1182n the home button, it is determined whether user input has been received 1183. For example, user input can be provided, which includes an answer MR20, MR30, MR 40 to the question Q1. If user input has been received 1183y, the user input is transmitted 1184 to the computer device 10. For example, and as described in detail above, a data set is transmitted to the eco-friendly action platform hosted on the computer device 10. The example process of providing 110 a contribution user interface loops back.

Back to Figure 2, once the user has given an answer to the question Q1, the computer implemented method comprises a **step of receiving 120 a plurality of answers MR20, MR30, MR40 to the question Q1.**

This reception of data can be done through a communication module 10 of the computer device 10.

The answers are preferably generated and sent by the client 20, 30, 40. For example, the user may be log-in through the client 20 and may have given an answer MR20 to the question Q1. In an embodiment of the present invention, one or several question Q1 may be updated every day in order to involve the user in the process. The question may be related to actions that the user may or may not have taken. For example, a series of two questions may be displayed the screen of the client 20, 30, 40 of the user, one related to the type of devices used daily by the user for which the user may answer by selecting one or several predetermined answers specifying a given device, and a second related to how often the user turned off the selected devices during his work day.

Upon receiving 120 the plurality of answers MR20, MR30, MR40 from the corresponding client 20, 30, 40, the computer implemented method 100 further comprises **a step of determining 130 a user score by processing the user related answer MR20, MR30, MR40 with a rule-based algorithm.** Preferably, the determination is done for each answer of the client that answered.

Such a determination can be done by a processing unit 11 of the computer device 10 for example with the use of the rule-based algorithm stored in the data memory 13 of said computer device.

Such rule-based algorithm encompasses any algorithm configured to identify and use a set of relational rules that collectively represent the knowledge captured by the computer device 10. Thus, a rule-based algorithm may include a human crafted algorithm but also an algorithm generated though machine learning, learning classifier systems, association rule learning or an artificial immune system.

In a preferred embodiment of a computer implemented method according to the invention, the rule-based algorithm is based on questions and answers, scoring rules relative to answers, user IDs and passwords stored in the data memory 13 of the computer device 10. Indeed, the rule-based algorithm may need to identify the user from which an answer has been provided. To ease the identification of the user, the answer given by said user may take the form of a request encoding the identity ID of the user. Such identity ID may depend upon the credentials used by the user when logging-in to the eco-friendly action platform such as described before. The request may then be encoded with the identity ID of said user when answering a question Q1. From the identification of the identity of the user, the rule-based algorithm may be configured to compare said identity ID to a repository comprising all the user credentials from employees for example. After identifying the user, the rule-based algorithm may be configured to identify a question Q1 related to the answer given by said user. To ease such identification, when answering a question Q1, the request comprising such answer may be configured for encoding a question serial number. The question serial number may then be compared to a correspondence database 14 storing questions and related question serial numbers. Upon identifying the corresponding question, the based-rule algorithm may identify the answer given by the user to said question. To identify the answer given by the user, the rule-based algorithm may be configured to associate the answer given by the user to a predetermined answer. Indeed, all the answers proposed to the user when answering to a question Q1 can be predetermined answers, such as binary answers "yes" or "no" or a plurality of answers that the user may select partially. Then, a value may be linked to the answer, said value can be encoded in a request when the user has given an answer to said question and further identified by the rule-based algorithm and compared to the correspondence database 14. Indeed, the correspondence database may be configured to store for each question at least two possible answers, each of said answers being encoded with a value.

Once the answer has been identified, the rule-based algorithm may be configured to determine a user score based on said identified answer. To this end, the correspondence database 14 is arranged to store a scoring rule for each answer comprised in said correspondence database. The scoring rule allows to determine a score, represented by a numerical value. It has to be noted that according to the answer provided by the user the numerical value representing the user score may be positive or negative.

Once the user score has been determined 130, the computer implemented method comprises a **step of updating 140 the progression level LVL and/or the avatar ATR based on the user score previously determined.**

Such a step can be done by the processing unit 11 of the computer device 10.

The progression level may be defined by a threshold number from which a level has been completed. The user score obtained by answering to a question Q1 and represented by a positive or a negative numerical value is used to update the progression level of the user. The progression level may then decrease or increase according to the user score. When a level threshold has been reached, the avatar may be also updated by changing according to the corresponding progression level. For example, an avatar may be associated to each progression level. The data memory 13 may store for example four progression levels named seed, sprout, sapling and tree, each level being associated to a predetermined avatar. For example, for every answer that is associated to an eco-friendly gesture, users may be awarded 1 point (corresponding to a numerical value "+1" when determining a user score) and earning 25 points are advanced to the next progression level.

The computer-based method may also comprise a **step of displaying 150 a classification of each user score per unit, per entity, and/or per geographical area.** Indeed, as previously described, the credentials of all users may be associated with a company or entity location and with a unit related to said entity. It then allows to rank users based on their score and to display a ranking of each user at different scales.

In order to provide a user with an information related to his impact on the environmental resources saving or losing, the computer implemented method may comprise **a step of computing 160 a goal indicator value.**

Such a step can be done by the processing unit 11 of the computer device 10.

The goal indicator value can correspond to a value determined from a user score compared to a correspondence database 14. Indeed, a correspondence database 14 according to the invention may comprise, for each numerical value determining a user score, a related value corresponding to a percentage or an amount of greenhouse gas that has been or not been emitted. Each numerical value determining a user score can also correspond to a percentage or an amount of resources, such as energy, that has been or not been consumed.

Such a goal indicator may then be displayed to the user to provide information on how much environmental resources he saved, or he lost depending on his past behavior.

In order to provide the user with brief news or statistics related to user answers, the computer implemented method may comprise a **step of providing 170 a review user interface that is presented on at least one client 50.**

This review user interface is preferably configured to provide an access to the eco-friendly action platform hosted by the computer device 10.

In particular, this review user interface presents aggregated values computed from answers MR20, MR30, MR40, user scores, progression level LVL and/or goal indicator values. Such a step can be done by the processing unit 11 of the computer device 10.

The client 50 is a client from where an administrator connects himself to the eco-friendly action platform. As an administrator, the corresponding user credentials gives specific rights to said user to write, delete, add or modify content on the eco-friendly action platform.

To provide a company with an indicator representing the efforts deployed by all the employees using the eco-friendly action platform, the computer implemented method may also comprise a **treatment 180 for evaluating the environmental resources saved by the company.** Such treatment 180 may comprise a step of determining 181, a global score value translating a company's sustainability goal or achievement. The step of determining 181 the global score value may consist of an operation corresponding to the sum of each user score over a period, for example over a year. For example, a user score over a year may correspond to the sum of each numerical value obtained from responding to each question Q1. Each user score over a year is then compared to the correspondence database 14 and summed up to provide the global score value, which may be expressed as a percentage or an amount of greenhouse gas that has not been emitted. This global score value may then be displayed on the human machine interface of a client 20, 30, 40 in view of a company's predetermined goal, for example a decrease of a given amount of greenhouse gas.

The treatment 180 may also comprise a step of determining 182, a world heat map showing saved energy impact made by users based on each user score. The human machine interface of a client 20, 30, 40 may be arranged to generate a world map providing an overview of impact made by users. Such impact may be characterized by a shade of a given color correlated with user scores based on user credentials and more particularly with the company or entity location as already discussed above.

To provide accurate results concerning the goal achievement of the company, the computer implemented method may comprise a step of receiving, by the communication module 12 of the computer device 10, consumption values measured by sensors positioned at one of the client's main locations and a **step of computing 190 a corrected amount of greenhouse gas that has not been emitted regarding to the users scores and consumption values measured.**

Such a step can be done by the processing unit 11 of the computer device 10, in particular using the rule-based algorithm.

To avoid a biased analysis by only taking into account the answers MR20, MR30, MR40 provided by users, a plurality of sensors can be placed on each main location of the company. For example, a main location may be each entity of the company, or more particularly each unit of each entity of the company.

In some examples, a sensor may consist of an environmental resource consumption metering element. For example, the sensor may be arranged to measure directly or indirectly the environmental resource associated with the activity's electric power consumption, temperature or water consumption of one or several buildings forming the entity of a company.

The consumption values measured by the sensors give an overall consumption of green house gas. The corrected amount of greenhouse gas that has not been emitted may be determined by comparing the global score value to the consumption values measured by the sensors.

The computer implemented method may comprise a **step of computing 195 a corrected global score value.**

Such a step can be done by the processing unit 11 of the computer device 10, in particular using the rule-based algorithm.

In particular, the corrected global score value is computed regarding the users' scores and the consumption values measured associated to client 20, 30, 40 and more broadly to an entity of a company or a company. Indeed, the corrected global score value may take into account the corrected amount of greenhouse gas that has not been emitted to provide a corrected global score.

The computer implemented method may comprise a step of computing, by the processing unit 11 of the computer device 10 and rule-based algorithms, a corrected world heat map showing saved energy impact made by users, regarding the users' scores and the consumption values measured. The human machine interface of a client 20, 30, 40 may be arranged to generate a world map providing an overview of the impact made by users. Such impact may be characterized by a shade of a given color correlated with consumption values measured and user scores based on user credentials and more particularly with the company or entity location as already discussed above.

## Claims

1. A computer implemented method (100) for promoting eco-friendly actions and helping to achieve predetermined environmental goals in a company,
said method being implemented by a computer device (10) comprising a processing unit (11), a communication module (12), a data memory (13) configured to store rule-based algorithms, said computer device being configured to host an eco-friendly action platform accessible by a plurality of clients (20, 30, 40, 50) through a contribution user interface or a review user interface,
the method comprising the steps of:
- providing (110), by the processing unit (11), a contribution user interface that is presented on a plurality of clients (20, 30, 40), said contribution user interface being configured to access the eco-friendly action platform hosted by the computer device (10), the contribution user interface presenting a question (Q1), a progression level (LVL) and an avatar (ATR) representing said progression level, said progression level (LVL) and avatar (ATR) being associated with a user identification (ID);
- receiving (120), by the communication module (12), a plurality of answers (MR20, MR30, MR40) to the question (Q1), said answers being generated and sent by the client (20, 30, 40);
- determining (130), by the processing unit (11) and for each client that answered, a user score by processing the user related answer (MR20, MR30, MR40) with the rule-based algorithm stored in the data memory (13);
- updating (140), by the processing unit (11), the progression level (LVL) and/or of the avatar (ATR) based on the user score previously determined,
- computing (160) a goal indicator value, said goal indicator value corresponding to a value determined from the user score compared to a correspondence database (14), said correspondence database comprising a related amount of greenhouse gas that has not been emitted corresponding to a numerical value of the user score,
- receiving, by the communication module (12), consumption values measured by sensors positioned at one of the client's main locations,
- computing (190), by the processing unit (11) and rule-based algorithms, a corrected amount of greenhouse gas regarding the user score and the consumption values measured,
- determining (181) a corrected global score value translating the company's sustainability goal or achievement over a period of time by adding the user score of each user over said period of time and by taking into account the corrected amount of greenhouse gas,
- displaying the progression level and/or the avatar, the goal indicator and/or the corrected global score value for promoting eco-friendly actions and helping to achieve predetermined environmental goals in the company.

2. The method according to claim 1, wherein said method comprises a step of displaying a classification of each user score per unit, per entity, and/or per geographical area.

3. The method according to claims 1 or 2, wherein the rule-based algorithm is based on questions and answers, scoring rules relative to answers, user IDs and passwords stored in the data memory (13).

4. The method according to claims 1 to 3, wherein said method comprises a step of providing (170), by the processing unit (11), of a review user interface that is presented on at least one client (50), said review user interface being configured to access the ecofriendly action platform hosted by the server (10), the review user interface presenting aggregated values computed from answers (MR20, MR30, MR40), user scores, progression level (LVL) and/or goal indicator values.

5. The method according to anyone of claims 1 to 4, wherein the method comprises a step of determining (182), a world heat map showing saved energy impact made by users based on each user score.

6. The method according to claim 5, wherein the method comprises a step of computing (195), by the processing unit (11) and rule-based algorithms, of a corrected world heat map showing saved energy impact made by users, regarding the users' scores and the consumption values measured.

7. The method according to anyone of claims 1 to 6, wherein the clients (20, 30, 40) on which the contribution user interface is presented are mobile communication devices comprising a mobile application configured to display the contribution user interface.

8. A system (1) for promoting eco-friendly actions and helping to achieve predetermined environmental goals, said system comprising a computer device(10), a processing unit (11), a communication module (12), a data memory (13) configured to store rule-based algorithms, said computer device being configured to host an eco-friendly action platform accessible by a plurality of clients (20, 30, 40, 50) through a contribution user interface or a review user interface, said system being configured to implement a method according to anyone of claims 1 to 7.

9. The system (1) according to claim 8, wherein the data memory (13) is configured to store questions and answers, scoring rules relative to answers, user IDs and passwords.

10. A computer program comprising instructions stored in a data memory (13) of a computer device (10) for implementing a method according to anyone of claims 1 to 7.

## Patentansprüche

1. Computerimplementiertes Verfahren (100) zum Fördern umweltfreundlicher Handlungen und zum Unterstützen beim Erreichen vorbestimmter Umweltziele in einem Unternehmen,
wobei das Verfahren durch eine Computervorrichtung (10) implementiert wird, die eine Verarbeitungseinheit (11), ein Kommunikationsmodul (12), einen Datenspeicher (13) umfasst, der konfiguriert ist, um regelbasierte Algorithmen zu speichern, wobei die Computervorrichtung konfiguriert ist, um eine umweltfreundliche Aktionsplattform zu hosten, die für eine Vielzahl von Clients (20, 30, 40, 50) über eine Beitragsbedienerschnittstelle oder eine Überprüfungsbedienerschnittstelle zugänglich ist,
das Verfahren umfassend die Schritte:
- Bereitstellen (110), durch die Verarbeitungseinheit (11), einer Beitragsbedienerschnittstelle, die auf einer Vielzahl von Clients (20, 30, 40) dargestellt wird, wobei die Beitragsbedienerschnittstelle konfiguriert ist, um auf die umweltfreundliche Aktionsplattform zuzugreifen, die von der Computervorrichtung (10) gehostet wird, wobei die Beitragsbedienerschnittstelle eine Frage (Q1), eine Fortschrittsstufe (LVL) und einen Avatar (ATR), der die Fortschrittsstufe repräsentiert, darstellt, wobei die Fortschrittsstufe (LVL) und der Avatar (ATR) mit einer Benutzeridentifikation (ID) verknüpft sind;
- Empfangen (120) einer Vielzahl von Antworten (MR20, MR30, MR40) auf die Frage (Q1) durch das Kommunikationsmodul (12), wobei die Antworten von dem Client (20, 30, 40) erzeugt und gesendet werden;
- Bestimmen (130), durch die Verarbeitungseinheit (11) und für jeden Client, der geantwortet hat, einer Benutzerbewertung durch Verarbeiten der benutzerbezogenen Antwort (MR20, MR30, MR40) mit dem regelbasierten Algorithmus, der in dem Datenspeicher (13) gespeichert ist;
- Aktualisieren (140), durch die Verarbeitungseinheit (11), des Fortschrittsniveaus (LVL) und/oder des Avatars (ATR) basierend auf der zuvor bestimmten Benutzerbewertung,
- Berechnen (160) eines Zielindikatorwerts, wobei der Zielindikatorwert einem Wert entspricht, der aus der Benutzerbewertung im Vergleich zu einer Korrespondenzdatenbank (14) bestimmt wird, wobei die Korrespondenzdatenbank eine zugehörige Menge an Treibhausgas umfasst, die nicht emittiert wurde und einem numerischen Wert der Benutzerbewertung entspricht,
- Empfangen, durch das Kommunikationsmodul (12), von Verbrauchswerten, die von Sensoren gemessen werden, die an einem der Hauptstandorte des Clients positioniert sind,
- Berechnen (190), durch die Verarbeitungseinheit (11) und regelbasierte Algorithmen, einer korrigierten Menge an Treibhausgas bezüglich der Benutzerbewertung und der gemessenen Verbrauchswerte,
- Bestimmen (181) eines korrigierten globalen Bewertungswerts, der das Nachhaltigkeitsziel oder die Nachhaltigkeitsleistung des Unternehmens über einen Zeitraum wiedergibt, durch Addieren der Benutzerbewertung jedes Benutzers über den Zeitraum und durch Berücksichtigung der korrigierten Menge an Treibhausgas,
- Anzeigen des Fortschrittsniveaus und/oder des Avatars, des Zielindikators und/oder des korrigierten globalen Bewertungswerts zur Förderung umweltfreundlicher Handlungen und zur Unterstützung beim Erreichen vorbestimmter Umweltziele im Unternehmen.

2. Verfahren nach Anspruch 1, wobei das Verfahren einen Schritt des Anzeigens einer Klassifizierung jeder Benutzerbewertung pro Einheit, pro Entität und/oder pro geografischem Gebiet umfasst.

3. Verfahren nach Anspruch 1 oder 2, wobei der regelbasierte Algorithmus auf Fragen und Antworten, Bewertungsregeln bezüglich Antworten, Benutzer-IDs und Passwörtern basiert, die in dem Datenspeicher (13) gespeichert sind.

4. Verfahren nach den Ansprüchen 1 bis 3, wobei das Verfahren einen Schritt des Bereitstellens (170) durch die Verarbeitungseinheit (11) einer Überprüfungsbedienerschnittstelle umfasst, die auf mindestens einem Client (50) dargestellt wird, wobei die Überprüfungsbedienerschnittstelle konfiguriert ist, um auf die umweltfreundliche Aktionsplattform zuzugreifen, die vom Server (10) gehostet wird, wobei die Überprüfungsbedienerschnittstelle aggregierte Werte darstellt, die aus Antworten (MR20, MR30, MR40), Benutzerbewertungen, Fortschrittsniveau (LVL) und/oder Zielindikatorwerten berechnet werden.

5. Verfahren nach einem der Ansprüche 1 bis 4, wobei das Verfahren einen Schritt des Bestimmens (182) einer globalen Wärmekarte umfasst, die die von Benutzern erzielte Energieeinsparungswirkung basierend auf der jeweiligen Benutzerbewertung zeigt.

6. Verfahren nach Anspruch 5, wobei das Verfahren einen Schritt des Berechnens (195) durch die Verarbeitungseinheit (11) und regelbasierte Algorithmen einer korrigierten globalen Wärmekarte umfasst, die die von Benutzern erzielte Energieeinsparungswirkung zeigt, bezüglich der Benutzerbewertungen und der gemessenen Verbrauchswerte.

7. Verfahren nach einem der Ansprüche 1 bis 6, wobei die Clients (20, 30, 40), auf denen die Beitragsbedienerschnittstelle dargestellt wird, mobile Kommunikationsgeräte sind, die eine mobile Anwendung umfassen, die konfiguriert ist, um die Beitragsbedienerschnittstelle anzuzeigen.

8. System (1) zum Fördern umweltfreundlicher Handlungen und zum Unterstützen beim Erreichen vorbestimmter Umweltziele, wobei das System eine Computervorrichtung (10), eine Verarbeitungseinheit (11), ein Kommunikationsmodul (12), einen Datenspeicher (13) umfasst, der dazu konfiguriert ist, regelbasierte Algorithmen zu speichern, wobei die Computervorrichtung konfiguriert ist, um eine umweltfreundliche Aktionsplattform zu hosten, die für eine Vielzahl von Clients (20, 30, 40, 50) über eine Beitragsbedienerschnittstelle oder eine Überprüfungsbedienerschnittstelle zugänglich ist, wobei das System konfiguriert ist, um ein Verfahren nach einem der Ansprüche 1 bis 7 zu implementieren.

9. System (1) nach Anspruch 8, wobei der Datenspeicher (13) konfiguriert ist, um Fragen und Antworten, Bewertungsregeln bezüglich Antworten, Benutzer-IDs und Passwörter zu speichern.

10. Computerprogramm, umfassend Anweisungen, die in einem Datenspeicher (13) einer Computervorrichtung (10) gespeichert sind, um ein Verfahren nach einem der Ansprüche 1 bis 7 zu implementieren.

## Revendications

1. Procédé mis en œuvre par ordinateur (100) permettant de promouvoir des actions respectueuses de l'environnement et d'aider à atteindre des objectifs environnementaux prédéterminés dans une entreprise,
ledit procédé étant mis en œuvre par un dispositif informatique (10) comprenant une unité de traitement (11), un module de communication (12), une mémoire de données (13) configurée pour stocker des algorithmes basés sur des règles, ledit dispositif informatique étant configuré pour héberger une plateforme d'actions respectueuses de l'environnement accessible par une pluralité de clients (20, 30, 40, 50) par le biais d'une interface utilisateur de contribution ou d'une interface utilisateur d'évaluation,
le procédé comprenant les étapes consistant à :
- fournir (110), par l'unité de traitement (11), une interface utilisateur de contribution qui est présentée sur une pluralité de clients (20, 30, 40), ladite interface utilisateur de contribution étant configurée pour accéder à la plateforme d'actions respectueuses de l'environnement hébergée par le dispositif informatique (10), l'interface utilisateur de contribution présentant une question (Q1), un niveau de progression (LVL) et un avatar (ATR) représentant ledit niveau de progression, lesdits niveau de progression (LVL) et avatar (ATR) étant associés à une identification (ID) d'utilisateur ;
- recevoir (120), par le module de communication (12), une pluralité de réponses (MR20, MR30, MR40) à la question (Q1), lesdites réponses étant générées et envoyées par le client (20, 30, 40) ;
- déterminer (130), par l'unité de traitement (11) et pour chaque client ayant répondu, un score d'utilisateur en traitant la réponse (MR20, MR30, MR40) liée à l'utilisateur avec l'algorithme basé sur des règles stocké dans la mémoire de données (13) ;
- mettre à jour (140), par l'unité de traitement (11), le niveau de progression (LVL) et/ou l'avatar (ATR) sur la base du score d'utilisateur précédemment déterminé,
- calculer (160) une valeur d'indicateur d'objectif, ladite valeur d'indicateur d'objectif correspondant à une valeur déterminée à partir du score d'utilisateur par rapport à une base de données de correspondance (14), ladite base de données de correspondance comprenant une quantité correspondante de gaz à effet de serre qui n'a pas été émise correspondant à une valeur numérique du score d'utilisateur,
- recevoir, par le module de communication (12), des valeurs de consommation mesurées par des capteurs positionnés au niveau de l'un des emplacements principaux du client,
- calculer (190), par l'unité de traitement (11) et des algorithmes basés sur des règles, une quantité corrigée de gaz à effet de serre au regard du score d'utilisateur et des valeurs de consommation mesurées,
- déterminer (181) une valeur de score global corrigée traduisant l'objectif ou la réalisation de l'entreprise en matière de développement durable sur une période de temps en ajoutant le score d'utilisateur de chaque utilisateur sur ladite période de temps et en tenant compte de la quantité corrigée de gaz à effet de serre,
- afficher le niveau de progression et/ou l'avatar, l'indicateur d'objectif et/ou la valeur de score global corrigée pour promouvoir des actions respectueuses de l'environnement et contribuer à l'atteinte d'objectifs environnementaux prédéterminés dans l'entreprise.

2. Procédé selon la revendication 1, dans lequel ledit procédé comprend une étape consistant à afficher une classification de chaque score d'utilisateur par unité, par entité, et/ou par zone géographique.

3. Procédé selon les revendications 1 ou 2, dans lequel l'algorithme basé sur des règles est basé sur des questions et réponses, des règles de notation relatives aux réponses, des ID et mots de passe d'utilisateurs stockés dans la mémoire de données (13).

4. Procédé selon les revendications 1 à 3, dans lequel ledit procédé comprend une étape consistant à fournir (170), par l'unité de traitement (11), une interface utilisateur d'examen qui est présentée sur au moins un client (50), ladite interface utilisateur d'examen étant configurée pour accéder à la plateforme d'actions respectueuses de l'environnement hébergée par le serveur (10), l'interface utilisateur d'examen présentant des valeurs agrégées calculées à partir de réponses (MR20, MR30, MR40), de scores d'utilisateurs, de niveau de progression (LVL) et/ou de valeurs d'indicateurs d'objectifs.

5. Procédé selon l'une quelconque des revendications 1 à 4, dans lequel le procédé comprend une étape consistant à déterminer (182) une carte thermique mondiale montrant l'impact énergétique économisé réalisé par des utilisateurs sur la base de chaque score d'utilisateur.

6. Procédé selon la revendication 5, dans lequel le procédé comprend une étape consistant à calculer (195), par l'unité de traitement (11) et des algorithmes basés sur des règles, une carte thermique mondiale corrigée montrant l'impact énergétique économisé réalisé par des utilisateurs, au regard des scores d'utilisateurs et des valeurs de consommation mesurées.

7. Procédé selon l'une quelconque des revendications 1 à 6, dans lequel les clients (20, 30, 40) sur lesquels l'interface utilisateur de contribution est présentée sont des dispositifs de communication mobiles comprenant une application mobile configurée pour afficher l'interface utilisateur de contribution.

8. Système (1) permettant de promouvoir des actions respectueuses de l'environnement et de contribuer à la réalisation d'objectifs environnementaux prédéterminés, ledit système comprenant un dispositif informatique (10), une unité de traitement (11), un module de communication (12), une mémoire de données (13) configurée pour stocker des algorithmes basés sur des règles, ledit dispositif informatique étant configuré pour héberger une plateforme d'actions respectueuses de l'environnement accessible par une pluralité de clients (20, 30, 40, 50) par le biais d'une interface utilisateur de contribution ou d'une interface utilisateur d'examen, ledit système étant configuré pour mettre en œuvre un procédé selon l'une quelconque des revendications 1 à 7.

9. Système (1) selon la revendication 8, dans lequel la mémoire de données (13) est configurée pour stocker des questions et des réponses, des règles de notation relatives aux réponses, des ID et mots de passe d'utilisateurs.

10. Programme informatique comprenant des instructions stockées dans une mémoire de données (13) d'un dispositif informatique (10) permettant de mettre en œuvre un procédé selon l'une quelconque des revendications 1 à 7.
